# EUROPÄISCHE PATENTSCHRIFT

(11) **EP 2 005 232 B1**
(45) Veröffentlichungstag und Bekanntmachung des Hinweises auf die Patenterteilung: **01.08.2018**
(21) Anmeldenummer: 07723724.6
(22) Anmeldetag: 29.03.2007
(51) Int. Cl.: G02B 6/44

(54) **AUFTEILUNGSVORRICHTUNG FÜR LICHTWELLENLEITER**
DIVIDING DEVICE FOR OPTICAL FIBRES
SEPARATEUR POUR FIBRES OPTIQUES

(30) Priorität: 11.04.2006 DE 202006006016 U
(43) Veröffentlichungstag der Anmeldung: 24.12.2008
(73) Patentinhaber: CCS Technology, Inc., Wilmington, DE 19803 (US)
(72) Erfinder: SYPLACZ, Roman, 58099 Hagen (DE); MÜLLER, Thorsten, 56708 Menden (DE); LAPP, Oliver, 42399 Wuppertal (DE); KLUWE, Wolf, 58119 Hagen (DE); KNORR, Jens, 58791 Werdohl (DE); MÜLLER, Michael, 58708 Menden (DE); THIBAULT, Simon, 58135 Hagen (DE)
(74) Vertreter: Sturm, Christoph
(86) Internationale Anmeldenummer: PCT/EP2007/002780
(87) Internationale Veröffentlichungsnummer: WO 2007/118585

(56) Entgegenhaltungen:
- EP-A- 0 735 394
- EP-A1- 0 697 610
- EP-A1- 1 181 604
- WO-A-2004/051337
- DE-A1- 4 029 857
- US-A- 5 146 532
- US-B1- 6 265 670

## Beschreibung

Die Erfindung betrifft eine Aufteilungsvorrichtung für Lichtwellenleiter nach dem Oberbegriff des Anspruchs 1.

Aus der WO 2004/051337 A1 ist eine Kabelmuffe zur Ablage von in Lichtwellenleiterkabeln geführten Lichtwellenleitern bekannt, die in einem Bereich unterhalb von Spleißkassetten zwei Aufteilungsvorrichtungen für Lichtwellenleiter umfasst, die Rücken an Rücken positioniert sind. Jede der Aufteilungsvorrichtungen verfügt über einen Grundkörper, der an einer ersten Seite mehrere erste Durchführungsbereiche für Bündeladern von Lichtwellenleitern und an einer zweiten Seite zweite Durchführungsbereiche für einzelne bzw. lose Lichtwellenleiter aufweist. Wie insbesondere Fig. 32 der WO 2004/051337 A1 entnommen werden kann, werden die ersten Durchführungsbereiche des Grundkörpers der Aufteilungsvorrichtung von Rippen gebildet, die von einer Basisplatte des Grundkörpers vorstehen. Jeweils zwei benachbarte Rippen begrenzen zusammen mit der Basisplatte des Grundkörpers einen ersten Durchführungsbereich, in welchem Bündeladern von Lichtwellenleitern geführt werden können. Die Fixierung der Bündeladern im Bereich der ersten Durchführungsbereiche erfolgt über Halteplättchen, die in benachbarten Rippen zugeordneten Führungsnute eingeschoben werden können. Durch das Einschieben der Halteplättchen in die Führungsnute der Rippen kann jeder erste Durchführungsbereich unterteilt werden, um in demselben mehrere Bündeladern zu fixieren.

Bei der aus der WO 2004/051337 A1 bekannten Aufteilungsvorrichtung müssen eine Vielzahl von Kleinteilen, nämlich eine Vielzahl von Halteplättchen, bereitgehalten werden, um Bündeladern in den ersten Durchführungsbereichen zu fixieren. Soll eine Bündelader in einem ersten Durchführungsbereich fixiert werden, so muss zuerst die Bündelader in den ersten Durchführungsbereich eingelegt werden, anschließend muss ein Halteplättchen in denselben eingeschoben werden, um die Bündelader im ersten Durchführungsbereich zu fixieren. Dies ist aufwändig und umständlich.

Weiterhin verfügt die aus der WO 2004/051337 A1 bekannte Aufteilungsvorrichtung für Lichtwellenleiter im Bereich der ersten Durchführungsbereiche für die Bündeladern über eine eingeschränkte Flexibilität, da alle Bündeladern auf dieselbe umständliche Art und Weise in einem ersten Durchführungsbereich fixiert werden müssen.

Eine Handhabungsvorrichtung für Lichtwellenleiter ist aus der EP 1 181 604 B1 bekannt. Da die Handhabungsvorrichtung gemäß EP 1 181 604 B1 prinzipiell über denselben Aufbau verfügt, wie die Aufteilungsvorrichtung gemäß WO 2004/051337 A1 im Bereich der ersten Durchführungsbereiche, verfügt dieselbe auch über dieselben Nachteile.

Weiter Stand der Technik ist aus der DE 40 29 857 A1 bekannt.

Hiervon ausgehend liegt der vorliegenden Erfindung das Problem zu Grunde, eine neuartige Aufteilungsvorrichtung sowie Handhabungsvorrichtung für Lichtwellenleiter zu schaffen.

Dieses Problem wird durch eine Aufteilungsvorrichtung für Lichtwellenleiter mit den Merkmalen des Anspruchs 1 gelöst.

Bei der erfindungsgemäßen Aufteilungsvorrichtung sind in jeden Durchführungsbereich für Bündeladern mehrere Bündeladerführungseinrichtungen einführbar. Die Bündeladerführungseinrichtungen können außerhalb des Bereichs der Aufteilungsvorrichtung mit Bündeladern vorbestückt werden. Eine solche mit Bündeladern vorbestückte Bündeladerführungseinrichtung kann dann in dem jeweiligen Durchführungsbereich der Aufteilungsvorrichtung positioniert werden. Hierdurch wird die Handhabung und Ablage von Bündeladern vereinfacht. Weiterhin können unterschiedlich ausgestaltete Bündeladerführungseinrichtungen in den Durchführungsbereichen der Aufteilungsvorrichtung angeordnet werden, wodurch sich die Flexibilität derselben erhöht. Weiterhin reduziert sich die Anzahl der benötigten Teile, was ebenfalls die Handhabung der erfindungsgemäßen Aufteilungsvorrichtung gegenüber der aus dem Stand der Technik bekannten Aufteilungsvorrichtung erleichtert.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: einen Ausschnitt aus einer Kabelmuffe mit zwei erfindungsgemäßen Aufteilungsvorrichtungen für Lichtwellenleiter nach einem ersten Ausführungsbeispiel der Erfindung in perspektivischer Ansicht;
- Fig. 2: den Ausschnitt der Fig. 1 ohne Spleißkassetten in perspektivischer Ansicht;
- Fig. 3:: eine erfindungsgemäße Aufteilungsvorrichtung für Lichtwellenleiter nach dem ersten Ausführungsbeispiel der Erfindung zusammen mit Bündeladerführungseinrichtungen in perspektivischer Ansicht;
- Fig. 4:: die Aufteilungsvorrichtung der Fig. 3 ohne Bündeladerführungseinrichtungen in perspektivischer Ansicht;
- Fig. 5:: einen Ausschnitt aus der Aufteilungsvorrichtung der Fig. 3 und 4 mit Bündeladerführungseinrichtungen in perspektivischer Ansicht;
- Fig. 6:: den Ausschnitt der Fig. 5 mit einer Bündeladerführungseinrichtung in perspektivischer Ansicht;
- Fig. 7:: eine Anordnung aus zwei Bündeladerführungseinrichtungen zusammen mit einem Verschlusselement in einer ersten perspektivischen Ansicht;
- Fig. 8:: die Anordnung der Fig. 7 in einer zweiten perspektivischen Ansicht;
- Fig. 9:: die Anordnung der Fig. 7 in Explosionsdarstellung;
- Fig. 10:: eine Bündeladerführungseinrichtung in Vorderansicht;
- Fig. 11:: die Bündeladerführungseinrichtung der Fig. 10 in Seitenansicht;
- Fig. 12:: die Bündeladerführungseinrichtung der Fig. 10 in Draufsicht;
- Fig. 13:: ein Verschlusselement in Vorderansicht;
- Fig. 14:: das Verschlusselement der Fig. 13 in Seitenansicht;
- Fig. 15:: das Verschlusselement der Fig. 13 in Unteransicht;
- Fig. 16:: eine alternative nicht erfindungsgemäße Bündeladerführungseinrichtung in perspektivischen Ansicht;
- Fig. 17:: eine weitere alternative nicht erfindungsgemäße Bündeladerführungseinrichtung in Explosionsdarstellung;
- Fig. 18:: eine erfindungsgemäße Aufteilungsvorrichtung für Lichtwellenleiter nach dem zweiten Ausführungsbeispiel der Erfindung zusammen mit Bündeladerführungseinrichtungen in perspektivischer Ansicht;
- Fig. 19:: eine Bündeladerführungseinrichtung der Aufteilungsvorrichtung der Fig. 18 in einer ersten perspektivischen Ansicht; und
- Fig. 20:: die Bündeladerführungseinrichtung der Fig. 19 in einer zweiten perspektivischen Ansicht.

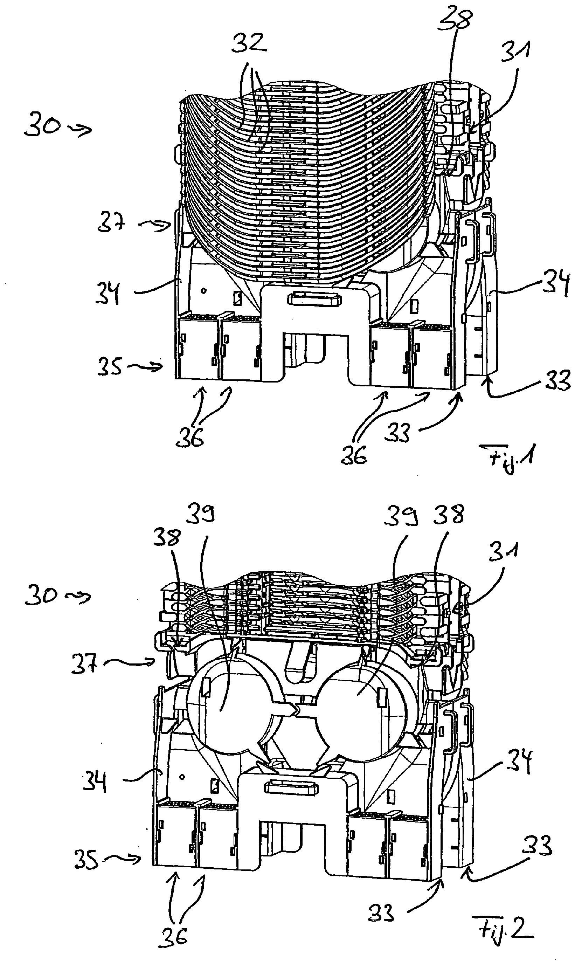

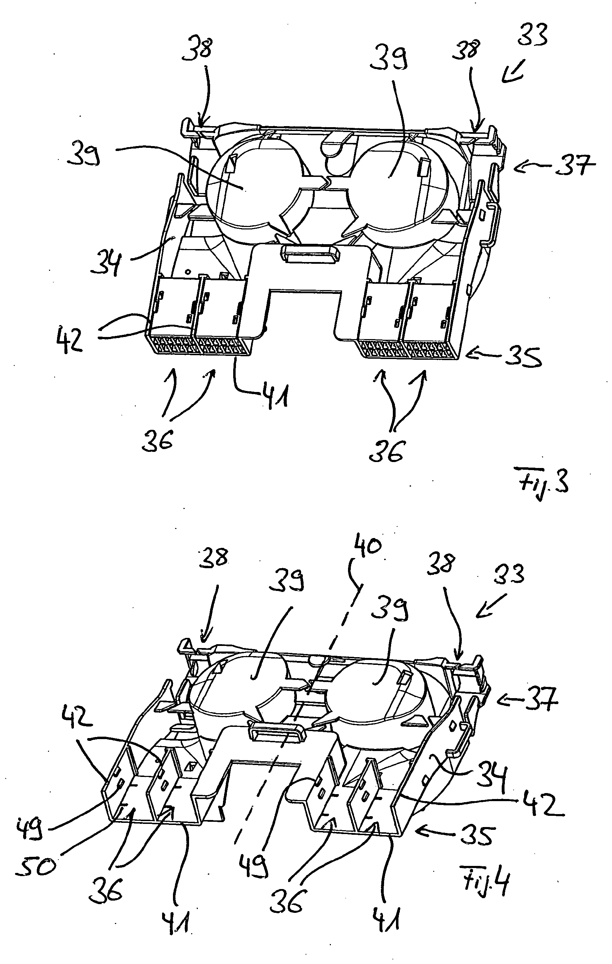

Fig. 1 und 2 zeigen einen Ausschnitt aus einer Kabelmuffe 30, die unterhalb einer Aufnahmevorrichtung 31 für Spleißkassetten 32 zwei erfindungsgemäße Aufteilungsvorrichtungen 33 für Lichtwellenleiter umfasst. Die beiden Aufteilungsvorrichtungen 33 sind Rücken an Rücken positioniert. Eine solche Aufteilungsvorrichtung 33 zeigen Fig. 3 und 4 in Alleindarstellung.

Die erfindungsgemäße Aufteilungsvorrichtung 33 verfügt über einen Grundkörper 34, wobei der Grundkörper 34 an einer ersten Seite 35 erste Durchführungsbereiche 36 für Lichtwellenleiter aufweist, nämlich für zu Bündeladern zusammengefasste Lichtwellenleiter. An einer der ersten Seite 35 gegenüberliegenden zweiten Seite 37 verfügt der Grundkörper 34 über zweite Durchführungsbereiche 38 für Lichtwellenleiter, nämlich für einzelne bzw. lose Lichtwellenleiter.

Zwischen der ersten Seite 35 und der zweiten Seite 37 der Aufteilungsvorrichtung 34, und damit zwischen den ersten Durchführungsbereichen 36 und den zweiten Durchführungsbereichen 38, sind im gezeigten Ausführungsbeispiel zwei trommelartige Führungseinrichtungen 39 angeordnet, an denen Lichtwellenleiter, die zusammenfasst zu Bündeladern über die ersten Durchführungsbereiche 36 der Aufteilungsvorrichtung 33 zugeführt und als lose Lichtwellenleiter über die zweiten Durchführungsbereiche 38 aus derselben abgeführt werden, unter Einhaltung zulässiger Mindestbiegeradien geführt werden können. Die trommelartigen Führungseinrichtungen 39 bilden demnach einen Überlängenspeicher für Lichtwellenleiter.

Die Aufteilungsvorrichtung 33 ist in Bezug auf eine gedachte Teilungslinie 40 (siehe Fig. 4), die sich zwischen den beiden trommelartigen Führungseinrichtungen 39 erstreckt, symmetrisch aufgebaut. Zu beiden Seiten der gedachten Teilungslinie 40 sind im gezeigten Ausführungsbeispiel jeweils eine trommelartige Führungseinrichtung 39, jeweils ein zweiter Durchführungsbereich 38 und jeweils zwei erste Durchführungsbereiche 36 für Lichtwellenleiter angeordnet.

Die hier vorliegende Erfindung betrifft nun solche Details der Aufteilungsvorrichtung 33, welche die Führung und Abfangung von Bündeladern im Bereich der ersten Durchführungsbereiche 36 betreffen.

Diese Details sind jedoch nicht auf die in der Zeichnung dargestellte Aufteilungsvorrichtung begrenzt, vielmehr können dieselben auch an Handhabungsvorrichtungen zum Einsatz kommen, die über keine zweiten Durchführungsbereiche sowie über keine trommelartigen Führungseinrichtungen verfügen.

Jeder erste Durchführungsbereich 36 der Aufteilungsvorrichtung 33 wird von einer Basisplatte 41 des Grundkörpers 34 gebildet, sowie von jeweils zwei von der Basisplatte 41 vorstehenden Rippen 42. Jeweils zwei unmittelbar benachbarte Rippen 42 sowie die Basisplatte 41 begrenzen demnach jeweils einen ersten Durchführungsbereich 36 für zu Bündeladern zusammengefasste Lichtwellenleiter. Im gezeigten Ausführungsbeispiel verfügt die Aufteilungsvorrichtung 33 im Bereich der ersten Seite 35 demnach über vier erste Durchführungsbereiche 36, wobei zu jeder Seite der gedachten Teilungslinie 40 jeweils zwei erste Durchführungsbereiche 36 angeordnet sind.

Im Sinne der hier vorliegenden Erfindung sind in jeden ersten Durchführungsbereich 36 jeweils mehrere Bündeladerführungseinrichtungen 43, die der Führung und Abfangung mehrerer Bündelade dienen, derart einführbar, dass die jeweilige Bündeladerführungseinrichtung 43 über derselben zugeordneten Rastmitteln mit den Rippen 42 und/oder der Basisplatte 41 des jeweiligen ersten Durchführungsbereichs 36 lösbar verrastet.

Die Bündeladerführungseinrichtungen 43 können außerhalb des Bereichs der ersten Durchführungsbereiche 36 mit Bündeladern vorbestückt werden und dann zusammen mit den Bündeladern in die ersten Durchführungsbereiche 36 eingeführt werden. Hierdurch erleichtert sich die Handhabung gegenüber dem Stand der Technik deutlich. Da in einer Bündeladerführungseinrichtung 43 weiterhin mehrere Bündeladern geführt und abgefangen werden können, reduziert sich gegenüber dem Stand der Technik auch die benötigte Anzahl von Einzelteilen.

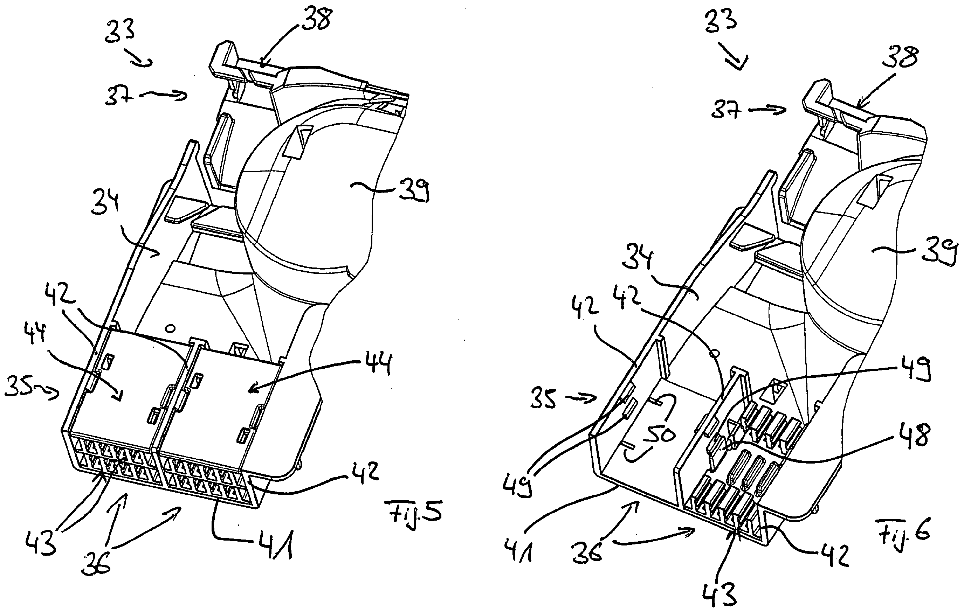

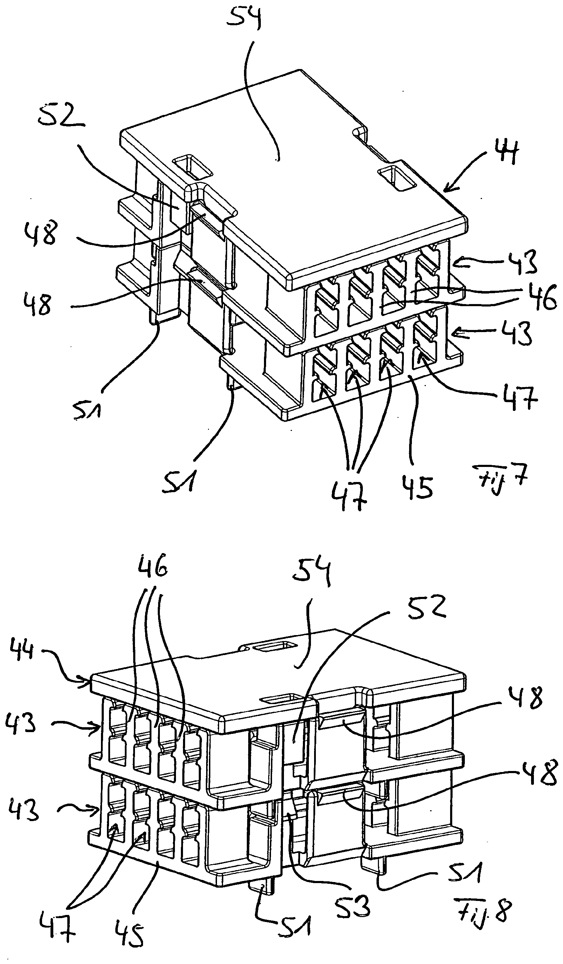

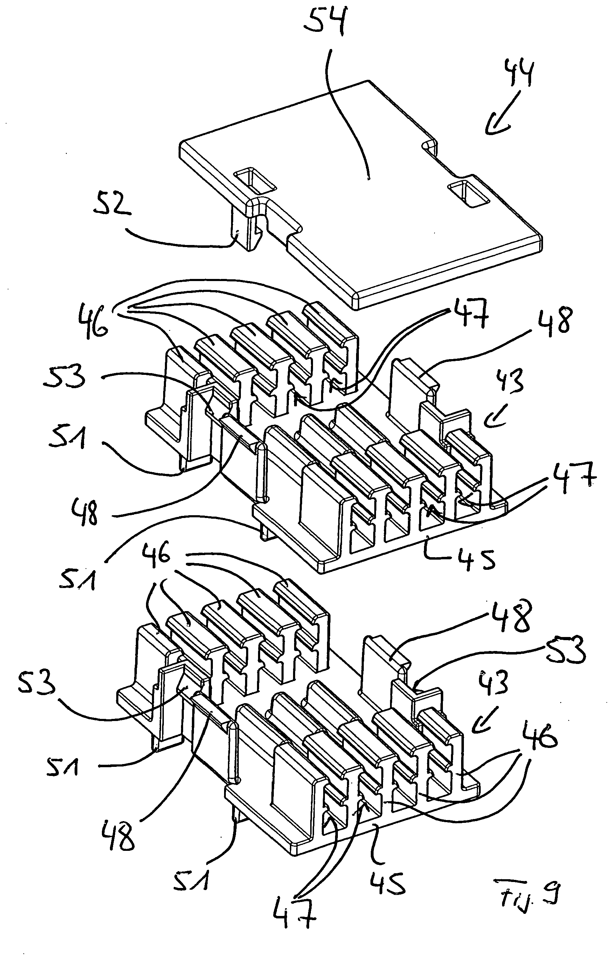

Im gezeigten Ausführungsbeispiel der Fig. 1 bis 6 sind in jeden ersten Durchführungsbereich 36 zwei Bündeladerführungseinrichtungen 43 übereinander einführbar. Die im jeweiligen ersten Durchführungsbereich 36 zu oberst angeordnete Bündeladerführungseinrichtung 43 ist von einem Verschlusselement 44 an einer Oberseite verschließbar. Fig. 7 und 8 zeigen jeweils eine Anordnung aus zwei Bündeladerführungseinrichtungen 43 und einem Verschlusselement 44, die in einen ersten Durchführungsbereich 36 eingeführt werden kann. Fig. 9 zeigt eine derartige Anordnung in Explosionsdarstellung.

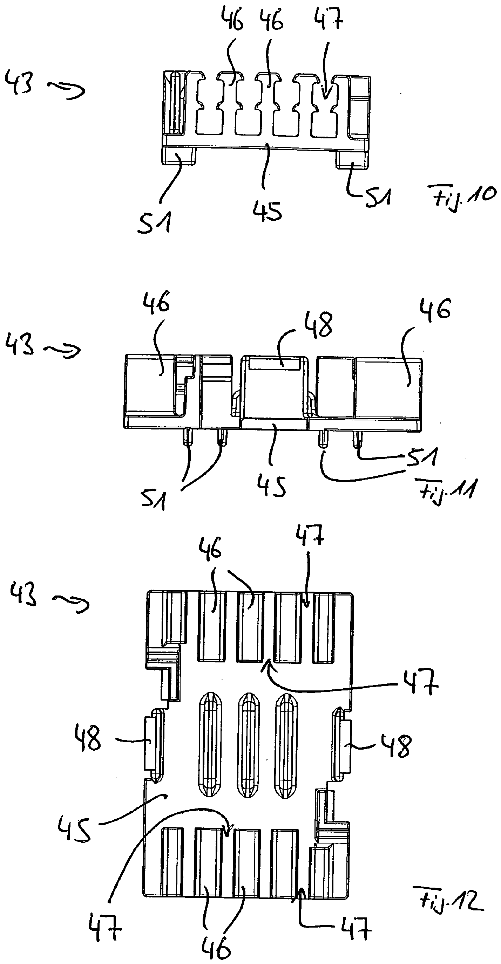

Im gezeigten Ausführungsbeispiel der Fig. 1 bis 12 verfügt jede Bündeladerführungseinrichtung 43 über eine Grundplatte 45, wobei an gegenüberliegenden Seiten der Grundplatte 45 jeweils Stege 46 von derselben vorstehen. Benachbarte Stege 46 bilden dabei jeweils einen Aufnahmebereich 47 für Bündeladern, wobei in jeden der Aufnahmebereiche 47 jeweils mindestens eine Bündelader geführt und abgefangen werden kann.

An zwei weiteren sich gegenüberliegenden Seiten stehen von der Grundplatte 45 einer Bündeladerführungseinrichtung 43 Rastmittel 48 vor, die im gezeigten Ausführungsbeispiel als widerhakenartige Rasthaken ausgebildet sind. Über die Rasthaken kann jede Bündeladerführungseinrichtung 43 in einem ersten Durchführungsbereich 36 lösbar verrastet werden, wobei gemäß Fig. 1 bis 6 die Rasthaken 48 der Bündeladerführungseinrichtungen 43 mit Rastmitteln 49 verrasten, die den Rippen 42 der ersten Durchführungsbereiche 36 zugeordnet sind. Die den Rippen 42 zugeordneten Rastmittel 49 sind dabei als Rastnasen ausgeführt, wobei jeder Rasthaken 48 einer Bündeladerführungseinrichtung 43 mit einer Rastnase 49 einer Rippe 42 lösbar verrastet.

Die Anordnung einer ersten Bündeladerführungseinrichtung 43 in einem noch freien ersten Durchführungsbereich 36 wird dadurch erleichtert, dass in die Basisplatte 41 Ausnehmungen 50 eingebracht sind, in welche die Bündeladerführungseinrichtung 43 mit Vorsprüngen 51 eingreift, die an einer Unterseite der Grundplatte 45 gegenüber derselben vorstehen.

Wie bereits erwähnt, ist die in einem ersten Durchführungsbereich 36 zu oberst angeordnete Bündeladerführungseinrichtung 43 an einer Oberseite von dem Verschlusselement 44 verschließbar, wobei das Verschlusselement 44 über demselben zugeordnete, als Rasthaken ausgebildete Rastmittel 52 mit entsprechenden Rastmitteln 53 der zu oberst angeordneten Bündeladerführungseinrichtung 43 verrastet. Die Rastmittel 53 der Bündeladerführungseinrichtungen 43, die mit den Rastmitteln 52 eines Verschlusselements 44 verrasten können, sind als Rastnasen ausgeführt. Die als Rasthaken ausgebildeten Rastmittel 52 des Verschlusselements 44 stehen von einer Grundplatte 54 des Verschlusselements 44 vor.

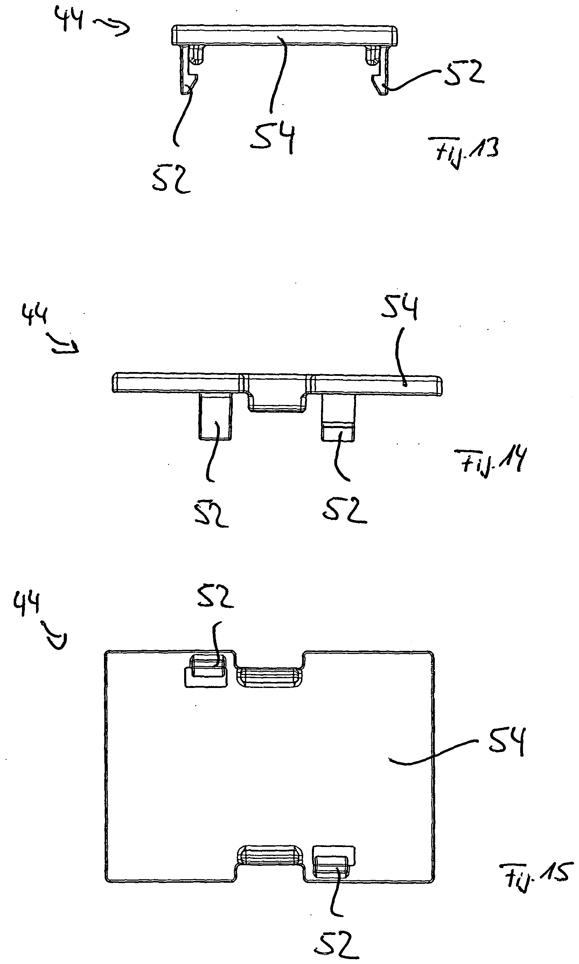

Ein Vorteil der erfindungsgemäßen Aufteilungseinrichtung 33 für Lichtwellenleiter ist darin zu sehen, dass in den ersten Durchführungsbereichen 36 beliebig ausgestaltete Bündeladerführungseinrichtungen angeordnet werden können. Bei den im Zusammenhang mit den Fig. 1 bis 15 dargestellten Bündeladerführungseinrichtungen 43 handelt es sich lediglich um ein bevorzugtes Ausführungsbeispiel derselben.

Weiterhin sei darauf hingewiesen, dass zu jeder Seite der gedachten Trennlinie 40 auch lediglich ein einziger erster Durchführungsbereich ausgebildet sein kann, wobei dann in diesem Fall jeweils die mittlere Rippe 42 entfällt. Auch können zu beiden Seiten der gedachten Trennlinie 40 mehr als zwei erste Durchführungsbereiche ausgebildet sein.

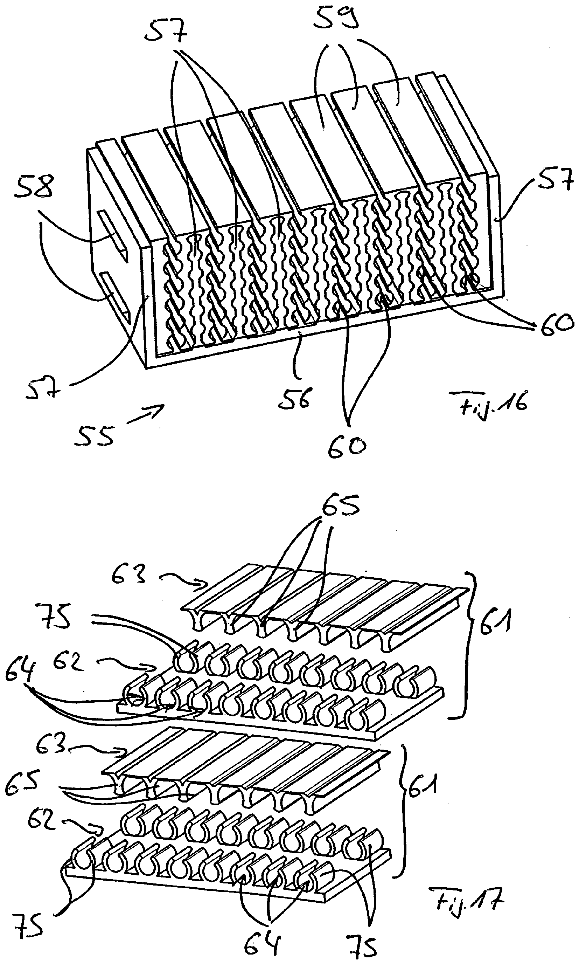

Fig. 16 zeigt ein nicht erfindungsgemäßes Beispiel einer in einem ersten Durchführungsbereich positionierbaren Bündeladerführungseinrichtung 55. Die in Fig. 16 dargestellte Bündeladerführungseinrichtung 55 ist derart bemessen, dass dieselbe einen ersten Durchführungsbereich komplett ausfüllt, so dass demnach lediglich eine solche Bündeladerführungseinrichtung 55 in einem ersten Durchführungsbereich positionierbar ist.

Die in Fig. 16 dargestellte Bündeladerführungseinrichtung 55 verfügt über eine Breite, die sich über zwei der in Fig. 1 bis 6 dargestellten ersten Durchführungsbereiche 36 erstreckt, so dass dieselbe demnach dann Verwendung findet, wenn keine mittleren Rippen 42 vorhanden sind, wenn demnach zu einer Seite der gedachten Trennlinie 40 lediglich ein einziger erster Durchführungsbereich 36 vorhanden ist.

Die Bündeladerführungseinrichtung 55 der Fig. 16 verfügt über eine Grundplatte 56, von der Stege 57 vorstehen. Die jeweils äußersten Stege 57 verfügen über Rastmittel 58, die mit den den Rippen 42 zugeordneten Rastmitteln 49 zusammenwirken. Die zwischen den beiden äußeren Stegen 57 positionierten Stege 57 verfügen über ein gewelltes Profil. Gemäß Fig. 16 sind die beiden äußeren Stege 57 einseitig und die mittleren Stege 57 jeweils beidseitig mit einem elastischen Material 59 beschichtet. Zwischen jeweils zwei benachbarten Stegen 57 bzw. zwischen dem elastischen Material 58, mit welchem benachbarte Stege 57 beschichtet sind, sind Aufnahmebereiche 60 für Bündeladern ausgebildet. Zwischen jeweils zwei benachbarten Stegen 57 bzw. dem elastischen Material 59 derselben können dabei gemäß Fig. 16 mehrere Bündeladern geführt und abgefangen werden. Ein weiteres nicht erfindungsgemäßes Beispiel einer in einem ersten Durchführungsbereich positionierbaren Bündeladerführungseinrichtung 61 zeigt Fig. 17, wobei jede der in Fig. 17 dargestellten Bündeladerführungseinrichtungen 61 ein Basisteil 62 und ein Deckelteil 63 umfasst. Das Basisteil 62 verfügt über mehrere C-förmig konturierte Aufnahmebereiche 64 für Bündeladern, die durch gebogene Stege 75 begrenzt sind, die von einer Grundplatte 76 vorstehen. Das Deckelteil 36 verfügt über Stege 65, die zwischen zwei Stege 75 benachbarter Aufnahmebereiche 64 einführbar sind. Das Deckelteil 36 ist vorzugsweise aus einem elastischen Material hergestellt, so dass dasselbe zur selektiven Freilegung einiger Aufnahmebereich 64 vom Basisteil 62 abgezogen werden kann, währenddessen andere Aufnahmebereiche 64 vom elastischen Deckelteil 63 abgedeckt und damit verschlossen bleiben.

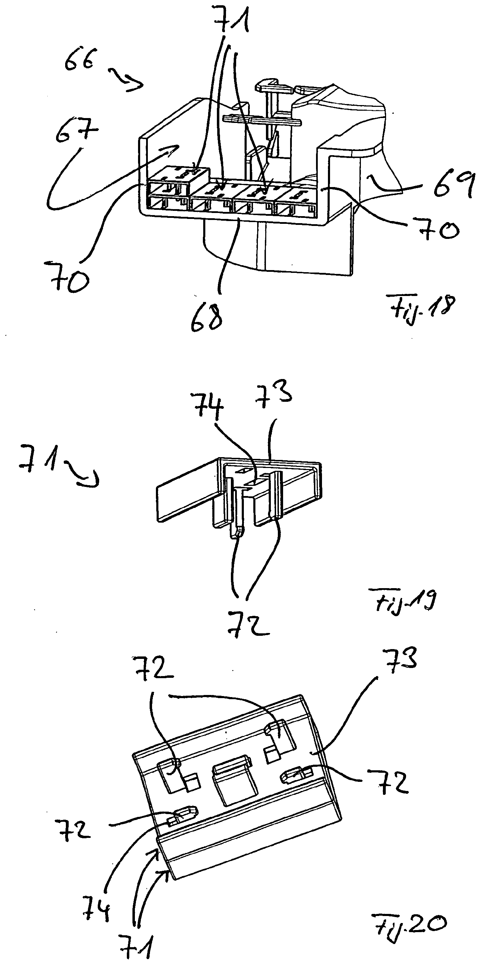

Fig. 18 zeigt einen Ausschnitt aus einer erfindungsgemäßen Aufteilungsvorrichtung 66 nach einem zweiten Ausführungsbeispiel der Erfindung im Bereich eines ersten Durchführungsbereichs 67. Der erste Durchführungsbereich 67 wird wiederum von einer Basisplatte 68 eines Grundkörpers 69 der Aufteilungsvorrichtung 66 sowie von zwei von der Basisplatte 68 vorstehenden Rippen 70 begrenzt. In dem ersten Durchführungsbereich 67 können gemäß Fig. 18 mehrere Bündeladerführungseinrichtungen 71 zur Führung und Abfangung von Bündeladern angeordnet werden. Fig. 19 und 20 zeigen eine solche Bündeladerführungseinrichtung 71 jeweils in Alleindarstellung.

Im Ausführungsbeispiel der Fig. 18 bis 20 sind die Bündeladerführungseinrichtungen 71 wiederum mit dem ersten Durchführungsbereich 67 für die Bündeladern verrastbar, wobei im Ausführungsbeispiel der Fig. 18 bis 20 Rastmittel 72 der Bündeladerführungseinrichtungen 71, die als Rasthaken ausgebildet sind, entweder mit der Basisplatte 68 zugeordneten Rastmitteln oder mit Rastmitteln, die einer bereits im jeweiligen ersten Durchführungsbereich 67 angeordneten Bündeladerführungseinrichtung 71 zugeordnet sind, verrasten. Bei diesen Rastmitteln handelt es sich um in die Basisplatte 68 bzw. in eine Grundplatte 73 der Bündeladerführungseinrichtungen 71 eingebrachte Ausnehmungen in welche die Rasthaken 72 der Bündeladerführungseinrichtungen 71 einschnappen können. In Fig. 18 bis 20 sind lediglich die in die Grundplatte 73 der Bündeladerführungseinrichtungen 71 eingebrachten Ausnehmungen 74 gezeigt.

### Bezugszeichenliste

- 30: Kabelmuffe
- 31: Aufnahmevorrichtung
- 32: Spleißkassette
- 33: Aufteilungsvorrichtung
- 34: Basiskörper
- 35: erste Seite
- 36: erster Durchführungsbereich
- 37: zweite Seite
- 38: zweiter Durchführungsbereich
- 39: trommelartige Führungseinrichtung
- 40: Teilungslinie
- 41: Basisplatte
- 42: Rippe
- 43: Bündeladerführungseinrichtung
- 44: Verschlusselement
- 45: Grundplatte
- 46: Steg
- 47: Aufnahmebereich
- 48: Rasmittel
- 49: Rastmittel
- 50: Aufnehmung
- 51: Vorsprung
- 52: Rastmittel
- 53: Rastmittel
- 54: Grundplatte
- 55: Bündeladerführungseinrichtung
- 56: Grundplatte
- 57: Steg
- 58: Rastmittel
- 59: elastisches Material
- 60: Aufnahmebereich
- 61: Bündeladerführungseinrichtung
- 62: Basisteil
- 63: Deckelteil
- 64: Aufnahmebereich
- 65: Steg
- 66: Aufteilungsvorrichtung
- 67: erster Durchführungsbereich
- 68: Basisplatte
- 69: Grundkörper
- 70: Rippe
- 71: Bündeladerführungseinrichtung
- 72: Rastmittel
- 73: Grundplatte
- 74: Ausnehmung
- 75: Steg
- 76: Grundplatte

## Patentansprüche

1. Aufteilungsvorrichtung für Lichtwellenleiter, mit einem Grundkörper (34), wobei der Grundkörper (34) an einer ersten Seite (35) mindestens einen ersten Durchführungsbereich (36) für zu Bündeladern zusammengefasste Lichtwellenleiter und an einer zweiten Seite (37) mindestens einen zweiten Durchführungsbereich (38) für einzelne bzw. lose Lichtwellenleiter aufweist, und wobei der oder jeder erste Durchführungsbereich (36) des Grundköpers (34) von zwei Rippen (42) gebildet ist, die von einer Basisplatte (41) des Grundköpers (34) vorstehen und die zusammen mit der Basisplatte (41) den jeweiligen ersten Durchführungsbereich (36) für zu Bündeladern zusammengefasste Lichtwellenleiter begrenzen, **dadurch gekennzeichnet, dass** die Aufteilungsvorrichtung mehrere Bündeladerführungseinrichtungen (43), die jeweils der Führung und/oder Abfangung mehrerer Bündeladern dienen, aufweist, wobei in den oder jeden ersten Durchführungsbereich (36) jeweils mehrere dieser Bündeladerführungseinrichtungen (43) derart übereinander einführbar sind, dass jede Bündeladerführungseinrichtung (43) mit den Rippen (42) des jeweiligen ersten Durchführungsbereichs (36) lösbar verrastet, wobei jede der in einem ersten Durchführungsbereich (36) übereinander angeordneten Bündeladerführungseinrichtungen (43) über Rastmittel (48), die an gegenüberliegenden Seiten von einer Grundplatte (45) der jeweiligen Bündeladerführungseinrichtung (43) vorstehen, mit den Rippen (42) des jeweiligen ersten Durchführungsbereichs (36) zugeordneten Rastmitteln (49) verrasten, und wobei auf einer in einem ersten Durchführungsbereich (36) zu oberst angeordneten Bündeladerführungseinrichtung (43) ein Verschlusselement (44) derart angeordnet ist, dass dem Verschlusselement (44) zugeordnete, als Rasthaken ausgebildete Rastmittel (52) mit entsprechenden der Bündeladerführungseinrichtung (43) zugeordneten Rastmitteln (53), die als Rastnasen ausgeführt sind, verrasten.

2. Aufteilungsvorrichtung nach Anspruch 1, **dadurch gekennzeichnet, dass** als widerhakenartige Rasthaken ausgebildete Rastmittel (48) jeder Bündeladerführungseinrichtung (43) mit den Rippen (42) des jeweiligen ersten Durchführungsbereichs (36) zugeordneten Rastmitteln (49), die als Rastnasen ausgeführt sind, verrasten.

3. Aufteilungsvorrichtung nach Anspruch 1 oder 2, **dadurch gekennzeichnet, dass** von der Grundplatte (45) jeder Bündeladerführungseinrichtung (43) mehrere Stege (46) vorstehen, wobei jeweils zwei benachbarte Stege (46) jeweils einen Aufnahmebereich (47) für jeweils mindestens eine Bündelader definieren, derart, dass an jeder Bündeladerführungseinrichtung (43) nebeneinander und gegebenenfalls übereinander mehrere Bündeladern geführt und/oder abgefangen werden können.

4. Aufteilungsvorrichtung nach einem oder mehreren der Ansprüche 1 bis 3, **dadurch gekennzeichnet, dass** eine in einem ersten Durchführungsbereich (36) zu unterst bzw. zuerst angeordnete Bündeladerführungseinrichtung (43) mit Vorsprüngen (51), die an einer Unterseite der Grundplatte (45) der jeweiligen Bündeladerführungseinrichtung (43) gegenüber der Grundplatte (45) vorstehen, in Ausnehmungen (50), die in die Basisplatte (41) des jeweiligen ersten Durchführungsbereichs (36) eingebracht sind, eingreift.

5. Aufteilungsvorrichtung nach einem oder mehreren der Ansprüche 1 bis 4, **dadurch gekennzeichnet, dass** zwischen der ersten Seite und der zweiten Seite mindestens eine trommelartige Führungseinrichtung (39) für Lichtwellenleiter angeordnet ist, an der Lichtwellenleiter unter Einhaltung zulässiger Mindestbeigeradien geführt werden können.

6. Aufteilungsvorrichtung nach Anspruch 5, **dadurch gekennzeichnet, dass** dieselbe in Bezug auf eine gedachte Teilungslinie (40), die sich zwischen zwei trommelartigen Führungseinrichtungen (39) erstreckt, symmetrisch aufgebaut ist, sodass sich zu beiden Seiten der gedachten Teilungslinie (40) jeweils eine trommelartige Führungseinrichtung (39), jeweils ein zweiter Durchführungsbereich (38) und jeweils zwei erste Durchführungsbereiche (36) angeordnet sind.

## Claims

1. Distribution device for optical waveguides, with a basic body (34), wherein the basic body (34) has, on a first side (35), at least one first bushing region (36) for optical waveguides which have been combined to form bundled cores, and, on a second side (37), at least one second bushing region (38) for individual or loose optical waveguides, and wherein the or each first bushing region (36) of the basic body (34) is formed by two ribs (42), which protrude from a bottom plate (41) of the basic body (34) and which, together with the bottom plate (41), delimit the respective first bushing region (36) for optical waveguides which have been combined to form bundled cores, **characterized in that** the distribution device has a plurality of bundled core guide devices (43) which are each used for guiding and/or restraining a plurality of bundled cores, wherein in each case a plurality of these bundled core guide devices (43) can be inserted into the or each first bushing region (36) one above the other in such a way that each bundled core guide device (43) latches detachably with the ribs (42) of the respective first bushing region (36), wherein each of the bundled core guide devices (43) which are arranged one above the other in a first bushing region (36) latch, by means of latching means (48) which protrude from a base plate (45) of the respective bundled core guide device (43) on opposite sides thereof, with latching means (49) which are associated with the ribs (42) of the respective first bushing region (36), and wherein a closure element (44) is arranged on a bundled core guide device (43) which is arranged at the very top in a first bushing region (36) in such a way that latching means (52) which are associated with the closure element (44) and are in the form of latching hooks latch with corresponding latching means (53) which are associated with the bundled core guide device (43) and are in the form of latching tabs.

2. Distribution device according to Claim 1, **characterized in that** latching means (48), which are in the form of barb-like latching hooks, of each bundled core guide device (43) latch with latching means (49) which are associated with the ribs (42) of the respective first bushing region (36) and are in the form of latching tabs.

3. Distribution device according to Claim 1 or 2, **characterized in that** a plurality of webs (46) protrude from the base plate (45) of each bundled core guide device (43), wherein in each case two adjacent webs (46) define in each case one accommodating region (47) for in each case at least one bundled core in such a way that a plurality of bundled cores can be guided and/or restrained next to one another and possibly one above the other on each bundled core guide device (43).

4. Distribution device according to one or more of Claims 1 to 3, **characterized in that** a bundled core guide device (43) which is arranged at the very bottom or first in a first bushing region (36) engages by way of protrusions (51), which protrude with respect to the base plate (45) on a lower side of the base plate (45) of the respective bundled core guide device (43), into cutouts (50) which are introduced into the bottom plate (41) of the respective first bushing region (36).

5. Distribution device according to one or more of Claims 1 to 4, **characterized in that** at least one drum-like guide device (39) for optical waveguides is arranged between the first side and the second side, which guide device (39) can be used to guide optical waveguides whilst maintaining permissible minimum bending radii.

6. Distribution device according to Claim 5, **characterized in that** the said distribution device is designed to be symmetrical with respect to an imaginary partition line (40), which extends between two drum-like guide devices (39), so that in each case one drum-like guide device (39), in each case one second bushing region (38) and in each case two first bushing regions (36) are arranged on both sides of the imaginary partition line (40).

## Revendications

1. Dispositif de séparation pour fibres optiques, comprenant un corps de base (34), dans lequel le corps de base (34) présente sur un premier côté (35) au moins une première zone de traversée (36) pour fibres optiques regroupées sous forme de câbles libres et sur un deuxième côté (37) au moins une deuxième zone de traversée (38) pour des fibres optiques individuelles ou libres, et dans lequel la ou chaque première zone de traversée (36) du corps de base (34) est formée par deux nervures (42) qui dépassent d'une plaque de base (41) du corps de base (34) et qui, en association avec la plaque de base (41), délimitent la première zone de traversée (36) respective pour des fibres optiques combinées sous forme de câbles libres,
**caractérisé en ce que** le dispositif de séparation comprend une pluralité de moyens de guidage de câbles libres (43), dont chacun sert à guider et/ou intercepter une pluralité de câbles libres,
dans lequel une pluralité desdits dispositifs de guidage de câbles libres (43) peuvent être respectivement introduits dans la ou chaque première zone de traversée (36) de manière à ce que chaque dispositif de guidage de câbles libres (43) s'encliquette de manière amovible sur les nervures (42) de la première zone de traversée (36) respective,
dans lequel chacun des dispositifs de guidage de câbles libres (43) disposés les uns sur les autres dans une première zone de traversée (36) s'encliquette par l'intermédiaire de moyens d'encliquetage (48), qui dépassent sur des côtés opposés d'une plaque de base (45) du dispositif de guidage de câbles libres (43) respectif, sur des moyens d'encliquetage (49) associés aux nervures (42) de la première zone de traversée (36) respective,
et dans lequel un élément de verrouillage (44) est disposé sur un dispositif de guidage de câbles libres (43) qui est disposé vers le haut dans une première zone de traversée (36) de manière à ce que des moyens d'encliquetage (52) associés à l'élément de verrouillage (44) et réalisés sous la forme de crochets d'encliquetage s'encliquettent sur des moyens d'encliquetage correspondants (53) associés au dispositif de guidage de câbles libres (43) et réalisés sous la forme de pattes d'encliquetage.

2. Dispositif de séparation selon la revendication 1, **caractérisé en ce que** des moyens d'encliquetage (48) de chaque dispositif de guidage de câbles libres (43), réalisés sous la forme de crochets d'encliquetage en forme de barbes, s'encliquettent sur des moyens d'encliquetage (49) associés aux nervures (42) de la première zone de traversée respective (36) et réalisés sous la forme de pattes d'encliquetage.

3. Dispositif de séparation selon la revendication 1 ou 2, **caractérisé en ce qu'**une pluralité d'arêtes (46) dépassent de la plaque de base (45) de chaque dispositif de guidage de câbles libres (43), dans lequel deux arêtes adjacentes (46) définissent respectivement une zone de réception (47) pour au moins un câble libre, de manière à pouvoir guider et/ou intercepter plusieurs câbles libres sur chaque dispositif de guidage de câbles libres (43) les uns à côté des autres et éventuellement les uns au-dessus des autres.

4. Dispositif de séparation selon une ou plusieurs des revendications 1 à 3, **caractérisé en ce qu'**un dispositif de guidage de câbles libres (43) qui doit être supporté ou d'abord disposé dans une première zone de traversée (36) et présente des protubérances (51) qui dépassent de la plaque de base (45) du dispositif de guidage de câbles libres (43) respectif par rapport à la plaque de base (45) s'engage dans des évidements (50) qui sont ménagés dans la plaque de base (41) de la première zone de traversée (36) respective.

5. Dispositif de séparation selon l'une ou plusieurs des revendications 1 à 4, **caractérisé en ce qu'**au moins un dispositif de guidage (39) sous forme de tambour pour fibres optiques est disposé entre le premier côté et le deuxième côté, sur lequel des fibres optiques peuvent être guidées en respectant les rayons de courbure minimaux admissibles.

6. Dispositif de séparation selon la revendication 5, **caractérisé en ce qu'**il est réalisé symétriquement par rapport à une ligne de séparation imaginaire (40) s'étendant entre deux dispositifs de guidage en forme de tambour (39) de manière à ce qu'un dispositif de guidage en forme de tambour (39), une deuxième zone de traversée (38) respective et deux premières zones de traversée (36) respectives soient disposées de part et d'autre de la ligne de séparation imaginaire (40).
